# EUROPÄISCHE PATENTSCHRIFT

(11) **EP 3 259 495 B1**
(45) Veröffentlichungstag und Bekanntmachung des Hinweises auf die Patenterteilung: **12.12.2018**
(21) Anmeldenummer: 16701045.3
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051112
(87) Internationale Veröffentlichungsnummer: WO 2016/131595

(56) Entgegenhaltungen:
- DE-A1-102011 089 167
- DE-A1-102012 013 248
- DE-A1-102012 217 027

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Ein Doppelkupplungsgetriebe weist über Schaltelemente schaltbare Zahnradsätzen auf, die insbesondere genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelement schaltbar sind. Mittels der Radebenen ist zumindest ein Verwindungs-Vorwärtsgang schaltbar, in dem mit Hilfe der Schaltelemente genau drei Radebenen in Reihe kombiniert in den durch das Doppelkupplungsgetriebe verlaufenden Momentenfluss geschaltet sind.

Aus der DE 10 2012 217 027 A1 ist eine Getriebevorrichtung mit zwei mit einem Antriebsaggregat in Wirkverbindung bringbaren Eingangswellen bekannt, welches unter den Wortlaut des Oberbegriffes des Anspruches 1 fällt. Aus der DE 10 2011 089 167 A1 ist ein Doppelkupplungsgetriebe in Vorgelegebauweise bekannt. Aus der DE 10 2012 013 248 A1 ist eine Antriebsvorrichtung für Kraftfahrzeuge bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentansprüche 1 sind die zur Bereitstellung des oben erwähnten Verwindungs-Vorwärtsgangs geschalteten drei Radebenen entweder komplett dem ersten Teilgetriebe oder komplett dem zweiten Teilgetriebe zugeordnet. Das heißt, dass bei geschaltetem Verwindungs-Vorwärtsgang nur das Teilgetriebe im Momentenfluss eingebunden ist, das die drei Verwindungs-Radebenen aufweist. Das andere Teilgetriebe ist dagegen vollständig vom Momentenfluss abgekoppelt. Von daher sind bei geschaltetem Verwindungs-Vorwärtsgang die beiden Teilgetriebe nicht miteinander gekuppelt, so dass im jeweils nicht aktiven Teilgetriebe stets sämtliche Vorwahlmöglichkeiten uneingeschränkt nutzbar sind.

Bei sämtlichen, im Doppelkupplungsgetriebe schaltbaren Verwindungs-Vorwärtsgängen sind entweder komplett drei Radebenen aus dem ersten Teilgetriebe oder komplett drei Radebenen aus dem zweiten Teilgetriebe schaltbar.

Zusätzlich kann jede der Radebenen einen Direktgang bereitstellen, bei dem genau eine Radebene in den durch das aktivierte Teilgetriebe verlaufenden Momentenfluß geschaltet ist. Bei einem derart ausgelegten Doppelkupplungsgetriebe stellen die Radebenen zusätzlich zu den Verwindungsgängen auch Direktgänge bereit. Die Radebenen bilden somit in Doppelfunktion sowohl Direkt-Vorwärtsgänge als auch Verwindungs-Vorwärtsgänge. Dem jeweiligen Verwindungs-Vorwärtsgang ist - im Unterschied zu den Direkt-Vorwärtsgängen - keine eigene Radebene zugeordnet. Auf diese Weise reduziert sich trotz einer Vielzahl von schaltbaren Vorwärtsgängen die Getriebe-Baulänge in der Axialrichtung.

Bevorzugt kann die Getriebestruktur so ausgelegt sein, dass insgesamt vier Verwindungs-Vorwärtsgänge bei insgesamt acht Radebenen darstellbar sind. Bei der Bereitstellung der Verwindungs-Vorwärtsgänge sind bevorzugt sämtliche Radebenen des Getriebes zumindest einmal als Verwindungs-Radebene in den Momentenfluss schaltbar.

Zum Schalten der Vorwärtsgänge sind genau fünf in Axialrichtung beidseitig schaltbare Schaltelemente vorgesehen (das heißt SE-A, SE-B, SE-D, SE-C und SE-F). Zudem ist zumindest ein einseitig schaltbares Schaltelement (SE-G) vorgesehen. Von den fünf beidseitig schaltbaren Schaltelementen sind genau vier Schaltelemente (nämlich SE-A, SE-B, SE-D und SE-C) koaxial zur Eingangsachse der Eingangswellen angeordnet. In diesem Fall ist genau ein beidseitig schaltbares Schaltelement (SE-F) auf der Abtriebswelle angeordnet. Die Getriebestruktur kann dabei so ausgelegt sein, dass zur Gangstellung der Vorwärtsgänge bevorzugt genau zwei der Schaltelemente (SE-A bis SE-F) betätigbar sind.

Jede Eingangswelle des Doppelkupplungsgetriebes weist genau ein beidseitig schaltbares Schaltelement (zum Beispiel eine Doppelsynchronkupplung) auf. Mittels des ersten Schaltelements (SE-C) wird die erste Eingangswelle mit ersten bis vierten Radebenen des ersten Teilgetriebes gekuppelt oder davon abgekuppelt. Mittels des zweiten Schaltelements (SE-A) wird dagegen die zweite Eingangswelle mit den fünften bis achten Radebenen des zweiten Teilgetriebes gekuppelt oder davon abgekuppelt.

In diesem Fall tragen die beiden koaxialen Eingangswellen nicht mehr Festzahnräder, sondern lediglich die beiden ersten und zweiten Schaltelemente. Dadurch können die Eingangswellen im Vergleich zum obigen Stand der Technik wesentlich materialreduzierter ausgelegt werden. Zudem können mittels der ersten und zweiten Schaltelemente (SE-C und SE-A) Radebenen im jeweils aktivierten Teilgetriebe zumindest teilweise vom Momentenfluss abgekoppelt werden (das heißt stillgelegt werden), wodurch das Trägheitsmoment des aktivierten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe angeordnete erste Schaltelement (SE-C) kann entweder an ein, auf der ersten Eingangswelle gelagertes antriebsseitiges Loszahnrad der ersten Radebene oder an eine, auf der ersten Eingangswelle koaxial gelagerte antriebsseitige Hohlwelle gekuppelt werden. Die auf der ersten Eingangswelle drehgelagerte, antriebsseitige Hohlwelle trägt zwei antriebsseitige Festzahnräder, die jeweils der zweiten Radebene und der dritten Radebene zugeordnet sind.
Auf der antriebsseitigen Hohlwelle des ersten Teilgetriebes ist zusätzlich ein antriebsseitiges Zahnrad der vierten Radebene lose gelagert. Das antriebsseitige Zahnrad der vierten Radebene ist über ein drittes Schaltelement (SE-D) an die antriebsseitige Hohlwelle des ersten Teilgetriebes kuppelbar.
Dem zweiten Teilgetriebe ist die, an dem ersten Teilgetriebe in der Axialrichtung unmittelbar angrenzende fünfte Radebene zugeordnet. Die fünfte Radebene kann ein antriebsseitiges Zahnrad aufweisen, das auf der zweiten Eingangswelle drehbar gelagert ist und bevorzugt mittels des obigen dritten Schaltelementes (SE-D) an die antriebsseitige Hohlwelle des ersten Teilgetriebes kuppelbar ist. Auf diese Weise kann die fünfte Radebene entweder auf das erste oder auf das zweite Teilgetriebe geschaltet werden.
Wie oben erwähnt, trägt die zweite Eingangswelle ebenfalls genau ein zweites Schaltelement (SE-A), das zum Beispiel als eine Doppelsynchronkupplung ausgebildet ist. In diesem Fall ist in der Axialrichtung des zweiten Schaltelementes im zweiten Teilgetriebe auf der einen Seite des zweiten Schaltelements ein auf der zweiten Eingangswelle gelagertes antriebsseitiges Loszahnrad der achten Radebene und auf der anderen Seite des zweiten Schaltelements eine auf der zweiten Eingangswelle koaxial gelagerte antriebsseitige Hohlwelle angeordnet. Die auf der zweiten Eingangswelle koaxial gelagerte antriebsseitige Hohlwelle und das obige Loszahnrad der achten Radebene sind (über das zweite Schaltelement SE-A) alternierend mit der zweiten Eingangswelle kuppelbar. Die antriebsseitige Hohlwelle des zweiten Teilgetriebes trägt ein antriebsseitiges Festzahnrad der siebten Radebene sowie ein antriebsseitiges Loszahnrad der sechsten Radebene. Zum Schalten des antriebsseitigen Loszahnrads der sechsten Radebene kann die antriebsseitige Hohlwelle ein viertes Schaltelement (SE-B) aufweisen, mit dem im zweiten Teilgetriebe das losgelagerte antriebsseitige Zahnrad der sechsten Radebene mit der Hohlwelle kuppelbar ist. In einer bevorzugten Ausführungsvariante kann mittels des obigen vierten Schaltelementes (SE-B) zusätzlich auch das antriebsseitige, losgelagerte Zahnrad der auf beide Teilgetriebe schaltbaren fünften Radebene an die antriebsseitige Hohlwelle des zweiten Teilgetriebes gekuppelt werden.

In einer technischen Umsetzung ist die Abtriebswelle achsparallel zur Eingangswelle angeordnet. Bevorzugt können die abtriebsseitigen Zahnräder der ersten und zweiten Radebene im ersten Teilgetriebe drehfest auf einer Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die Hohlwelle oder ein abtriebsseitiges Zahnrad der dritten Radebene mit der Abtriebswelle kuppelbar ist.

In ähnlicher Weise wie im ersten Teilgetriebe können auch im zweiten Teilgetriebe die abtriebsseitigen Zahnräder der siebten und achten Radebene drehfest auf einer abtriebsseitigen Hohlwelle angeordnet sein, die koaxial auf der Abtriebswelle drehbar gelagert ist. Die im zweiten Teilgetriebe auf der Abtriebswelle drehgelagerte Hohlwelle kann mit Hilfe eines sechsten, einseitigen Schaltelementes (SE-E) mit der Abtriebswelle gekuppelt werden. In einer nicht von der Erfindung umfassten Vergleichsform kann das abtriebsseitige Zahnrad der auf beide Teilgetriebe schaltbaren fünften Radebene als ein Festzahnrad drehfest auf der Abtriebswelle angeordnet sein. In diesem Fall würde im Fahrbetrieb die fünfte Radebene ständig mitdrehen und gegebenenfalls die Drehlager vorzeitig verschleißen. Vor diesem Hintergrund ist erfindungsgemäß das abtriebsseitige Zahnrad der fünften Radebene lose auf der Abtriebswelle gelagert und über ein siebtes Schaltelement (SE-G) an die Abtriebswelle kuppelbar.

Wie oben erwähnt, kann der Zahnradsatz der fünften Radebene auf beide Teilgetriebe schaltbar sein. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der, die fünfte Radebene bildende Zahnradsatz zumindest den 3. Vorwärtsgang des Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der die fünfte Radebene bildende Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer vorteilhaften Weiterbildung der Erfindung können bei einem 12-Gang-Getriebe durch Mehrfachnutzung der Zahnradsätze nur acht Gangebenen verwendet sein, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Schaltelementen, zum Beispiel Doppelkupplungen, und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

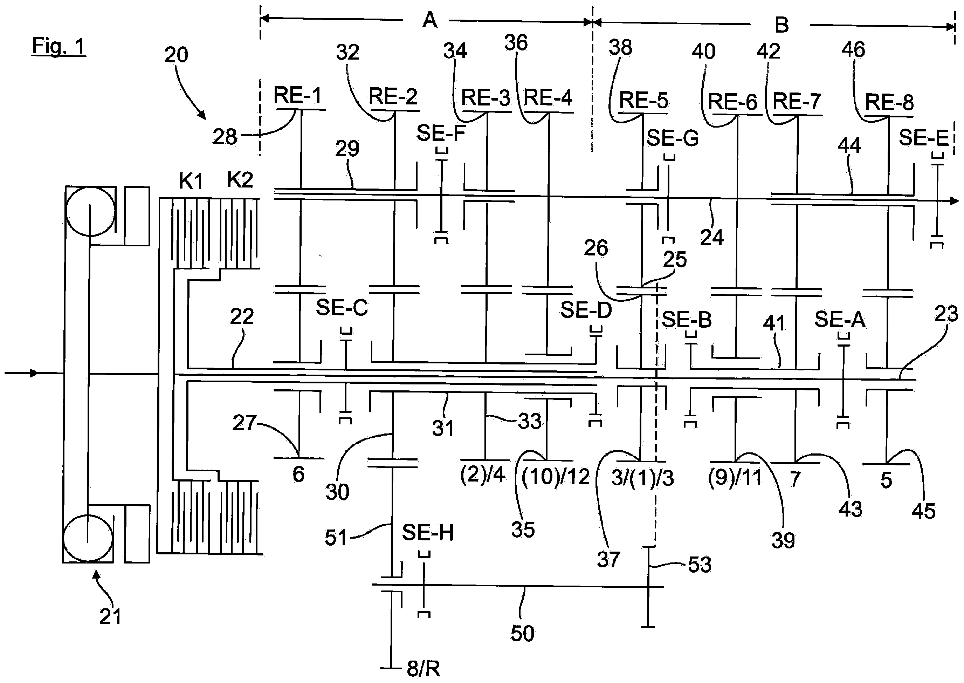

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

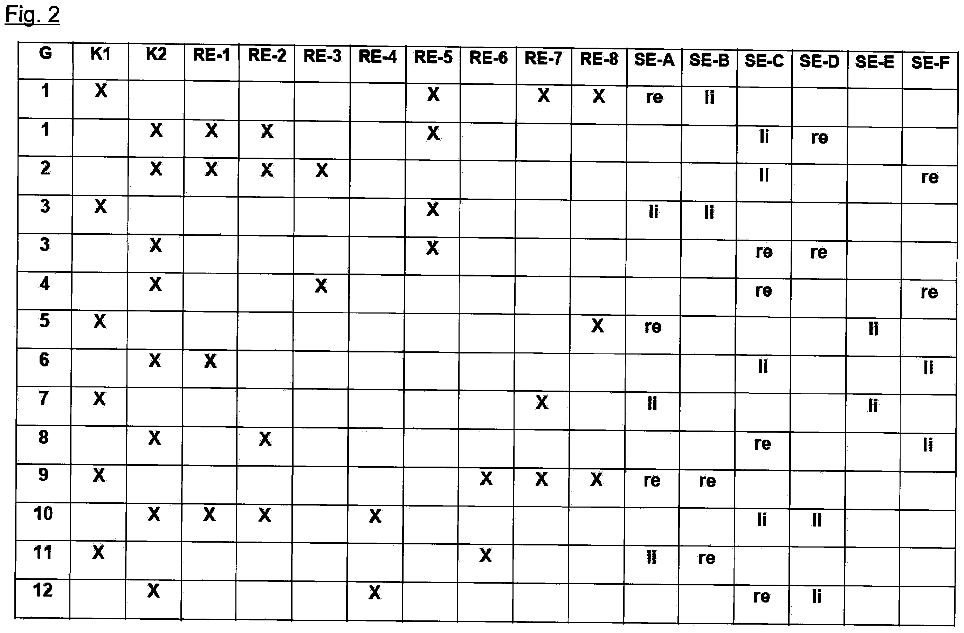

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kräftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über erste bis siebte Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei mittels der Radebenen (RE-1 bis RE-8) zumindest ein Verwindungs-Vorwärtsgang (1, 2, 9, 10 - Fig.2) bildbar ist, in dem mittels der Schaltelemente (SE-A bis SE-G) genau drei Radebenen in Reihe kombiniert in den durch das Doppelkupplungsgetriebe verlaufenden Momentenfluss des eingelegten Ganges geschaltet sind, wobei die zur Bereitstellung des Verwindungs-Vorwärtsgangs geschalteten drei Radebenen entweder komplett dem ersten Teilgetriebe (A) oder komplett dem zweiten Teilgetriebe (B) zugeordnet sind, und wobei bei geschaltetem Verwindungs-Vorwärtsgang nur das die geschalteten drei Radebenen aufweisende Teilgetriebe im Momentenfluss eingebunden ist und das andere Teilgetriebe vollständig vom Momentenfluss abgekoppelt ist, **dadurch gekennzeichnet, dass** sämtliche im Doppelkupplungsgetriebe bei einer Gangschaltung schaltbaren Verwindungs-Vorwärtsgänge (1, 2, 9, 10 - Fig.2) entweder komplett mit drei Radebenen aus dem ersten Teilgetriebe (A) oder komplett mit drei Radebenen aus dem zweiten Teilgetriebe (B) bildbar sind, so dass bei keinem der Verwindungs-Vorwärtsgänge die beiden Teilgetriebe (A, B) miteinander gekuppelt sind, dass zum Schalten der Vorwärtsgänge genau fünf in Axialrichtung beidseitig schaltbare Schaltelemente (SE-A, SE-B, SE-D, SE-C, SE-F) vorgesehen sind, und dass zumindest ein einseitig schaltbares Schaltelement (SE-G, SE-E) vorgesehen ist, dass von den fünf beidseitig schaltbaren Schaltelementen (SE-A, SE-B, SE-D, SE-C, SE-F) genau vier Schaltelemente koaxial zur Eingangswellenachse der Eingangswellen (22, 23) angeordnet sind, und dass genau ein beidseitig schaltbares Schaltelement (SE-F) auf der Abtriebswelle (24) angeordnet ist, dass die Eingangswellen (22, 23) frei von darauf angeordneten drehfesten Zahnrädern der acht Radebenen (RE-1 bis RE-8) sind, und dass die erste Eingangswelle (22) genau ein in Axialrichtung beidseitig schaltbares erstes Schaltelement (SE-C) aufweist, und die zweite Eingangswelle (23) genau ein in Axialrichtung beidseitig schaltbares zweites Schaltelement (SE-A) aufweist, und dass mittels des ersten Schaltelements (SE-C) die erste Eingangswelle (22) mit den ersten bis vierten Radebenen (RE-1 bis RE-4) des ersten Teilgetriebes (A) kuppelbar oder davon abkuppelbar ist, und dass mittels des zweiten Schaltelements (SE-A) die zweite Eingangswelle (23) mit den fünften bis achten Radebenen (RE-5 bis RE-8) des zweiten Teilgetriebes (B) kuppelbar oder davon abkuppelbar ist, dass in der Axialrichtung des ersten Schaltelements (SE-C) auf dessen einer Seite ein auf der ersten Eingangswelle (22) gelagertes, antriebsseitiges Loszahnrad (27) der ersten Radebene (RE-1) und auf der anderen Seite des ersten Schaltelements (SE-C) eine auf der ersten Eingangswelle (22) koaxial gelagerte antriebsseitige Hohlwelle (31) des ersten Teilgetriebes (A) angeordnet ist, die über das erste Schaltelement (SE-C) alternierend mit der ersten Eingangswelle (22) kuppelbar sind, und dass die antriebsseitige Hohlwelle (31) des ersten Teilgetriebes (A) ein Festzahnrad (30) der zweiten Radebene (RE-2) und ein Festzahnrad (33) der dritten Radebene (RE-3) trägt, dass auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) des ersten Teilgetriebes (A) über das dritte Schaltelement (SE-D) mit dem losgelagerten antriebsseitigen Zahnrad (35) der vierten Radebene (RE-4) kuppelbar ist, dass das zweite Teilgetriebe (B) die, dem ersten Teilgetriebe (A) in Axialrichtung unmittelbar angrenzende fünfte Radebene (RE-5) aufweist, und dass die fünfte Radebene (RE-5) mittels des dritten Schaltelements (SE-D) mit dem ersten Teilgetriebe (A) kuppelbar ist, und dass das abtriebsseitige Zahnrad (38) der auf beide Teilgetriebe (A, B) schaltbaren fünften Radebene (RE-5) lose auf der Abtriebswelle (24) gelagert ist und über ein siebtes Schaltelement (SE-G) mit der Abtriebswelle (24) kuppelbar ist, und dass in der Axialrichtung des zweiten Schaltelements (SE-A) des zweiten Teilgetriebes (B) auf der einen Seite des zweiten Schaltelements (SE-A) ein auf der zweiten Eingangswelle (23) gelagertes, antriebsseitiges Loszahnrad (45) der achten Radebene (RE-8) und auf der anderen Seite des zweiten Schaltelements (SE-A) eine auf der zweiten Eingangswelle (23) koaxial gelagerte antriebsseitige Hohlwelle (41) des zweiten Teilgetriebes (B) angeordnet ist, und dass das Loszahnrad (45) der achten Radebene (RE-8) und die antriebsseitige Hohlwelle (41) des zweiten Teilgetriebes (B) über das zweite Schaltelement (SE-A) alternierend mit der zweiten Eingangswelle (23) kuppelbar sind, und dass die antriebsseitige Hohlwelle (41) des zweiten Teilgetriebes (B) zumindest ein Festzahnrad (43) der siebten Radebene (RE-7) trägt.

2. Doppelkupplungsgetriebe nach Anspruch 1, **dadurch gekennzeichnet, dass** das Doppelkupplungsgetriebe ein 12-Gang-Getriebe ist, das insgesamt acht Radebenen (RE-1 bis RE-8) aufweist, mit denen insgesamt acht Direktgänge (3, 4, 5, 6, 7, 8, 11, 12 - Fig.2) und insgesamt vier Verwindungsgänge (1, 2, 9, 10 - Fig.2) schaltbar sind.

3. Doppelkupplungsgetriebe nach Anspruch 1, **dadurch gekennzeichnet, dass** die auf beide Teilgetriebe (A, B) schaltbare fünfte Radebene (RE-5) mit ihrem antriebsseitigen Zahnrad (37) auf der zweiten Eingangswelle (23) lose gelagert ist und mittels des dritten Schaltelements (SE-D) an die antriebsseitige Hohlwelle (31) des ersten Teilgetriebes (A) kuppelbar ist.

4. Doppelkupplungsgetriebe nach Anspruch 1, **dadurch gekennzeichnet, dass** auf der antriebsseitigen Hohlwelle (41) des zweiten Teilgetriebes (B) ein antriebsseitiges Zahnrad (39) der sechsten Radebene (RE-6) lose gelagert ist, und dass die antriebsseitige Hohlwelle (41) des zweiten Teilgetriebes (B) das vierte Schaltelement (SE-B) aufweist, mit dem das losgelagerte antriebsseitige Zahnrad (39) der sechsten Radebene (RE-6) mit der antriebsseitigen Hohlwelle (41) des zweiten Teilgetriebes (B) kuppelbar ist.

5. Doppelkupplungsgetriebe nach Anspruch 4, **dadurch gekennzeichnet, dass** das antriebsseitige Zahnrad (37) der auf beide Teilgetriebe (A, B) schaltbaren fünften Radebene (RE-5) mittels des vierten Schaltelements (SE-B) mit dem zweiten Teilgetriebe (B) kuppelbar ist.

6. Doppelkupplungsgetriebe nach einem der vorhergehenden Ansprüche, **dadurch gekennzeichnet, dass** die abtriebsseitigen Zahnräder (28, 32) der ersten und zweiten Radebenen (RE-1, RE-2) des ersten Teilgetriebes (A) drehfest auf einer abtriebsseitigen Hohlwelle (29) des ersten Teilgetriebes (A) angeordnet sind, die koaxial auf der Abtriebswelle (24) drehbar gelagert ist.

7. Doppelkupplungsgetriebe nach Anspruch 6, **dadurch gekennzeichnet, dass** die Abtriebswelle (24) das fünfte Schaltelement (SE-F) aufweist, mittels dem im ersten Teilgetriebe (A) alternierend die abtriebsseitige Hohlwelle (29) des ersten Teilgetriebes (A) oder ein abtriebsseitiges Zahnrad (34) der dritten Radebene (RE-3) mit der Abtriebswelle (24) kuppelbar ist.

8. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

9. Doppelkupplungsgetriebe nach Anspruch 8, **dadurch gekennzeichnet, dass** die Abtriebswelle (24) das sechste Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle, having sets of gearwheels switchable via first to seventh switching elements which form exactly eight wheel planes (RE-1 to RE-8) arranged one after another in the axial direction from the input to the output side of the dual clutch transmission in the sequence first to eighth, said wheel planes are respectively assigned to a first sub-transmission (A) and a second sub-transmission (B), of which the first sub-transmission (A) has a first input shaft (22) and the second sub-transmission (B) has a second input shaft (23) and both sub-transmissions (A, B) have a common output shaft (24), wherein the input shafts (22, 23) coaxial to one another are alternately activatable via each power shiftable clutch (K1, K2) and the even forwards gears (2, 4, 6, 8,10,12) are assigned to the first sub-transmission (A) and the odd forwards gears (1, 3, 5, 7, 9, 11) are assigned to the second sub-transmission (B) which are switchable in the case of a gear change via the switching elements (SE-A to SE-G), wherein at least one twist forwards gear (1, 2, 9, 10 - Fig. 2) can be formed by means of the wheel planes (RE-1 to RE-8) in which exactly three wheel planes combined in a row in the toque flow of the engaged gear running through the dual clutch transmission are switched by means of the switching elements (SE-A to SE-G), wherein the three wheel planes switched to provide the twist forwards gear are assigned either completely to the first sub-transmission (A) or completely to the second sub-transmission (B) and wherein in the case of the switched twist forwards gear only the sub-transmission having the switched three wheel planes is integrated in the torque flow and the other sub-transmission is completely decoupled from the torque flow, **characterised in that** all twist forwards gears (1, 2, 9, 10 - Fig. 2) switchable in the dual clutch transmission during a gear change can be formed either completely with three wheel planes from the first sub-transmission (A) or completely with three wheel planes from the second sub-transmission (B) such that the two sub-transmissions (A, B) are not coupled to one another in the case of any of the twist forwards gears, **in that** exactly five switching elements (SE-A, SE-B, SE-D, SE-C, SE-F) switchable on both sides in the axial direction are provided to switch the forward gears, **in that** at least one switching element (SE-G, SE-E) switchable on one side is provided, **in that** of the five switching elements (SE-A, SE-B, SE-D, SE-C, SE-F) switchable on both sides, exactly four switching elements are arranged coaxially to the input shaft axis of the input shafts (22, 23) and **in that** exactly one switching element (SE-F) switchable on both sides is arranged on the output shaft (24), **in that** the input shafts (22, 23) are free from gearwheels, arranged thereon in a torque-proof manner, of the eight wheel planes (RE-1 to RE-8) and **in that** the first input shaft (22) has exactly one first switching element (SE-C) switchable on both sides in the axial direction and **in that** the second input shaft (23) has exactly one second switching element (SE-A) switchable on both sides in the axial direction, and **in that** the first input shaft (22) is couplable by means of the first switching element (SE-C) to the first to fourth wheel planes (RE-1 to RE-4) of the first sub-transmission (A) or is decouplable therefrom and **in that** the second input shaft (23) is couplable by means of the second switching element (SE-A) to the fifth to eighth wheel planes (RE-5 to RE-8) of the second sub-transmission (B) or is decouplable therefrom, **in that** a drive-side idler gearwheel (27) of the first wheel plane (RE-1) mounted on the first input shaft (22) is arranged in the axial direction of the first switching element (SE-C) on its one side and a drive-side hollow shaft (31) of the first sub-transmission (A) mounted coaxially on the first input shaft (22) is arranged on the other side of the first switching element (SE-C) which are couplable via the first switching element (SE-C) alternately with the first input shaft (22) and **in that** the drive-side hollow shaft (31) of the first sub-transmission (A) carries a fixed gearwheel (30) of the second wheel plane (RE-2) and a fixed gearwheel (33) of the third wheel plane (RE-3) **in that** a drive-side gearwheel (35) of the fourth wheel plane (RE-4) is mounted loosely on the drive-side hollow shaft (31) of the first sub-transmission (A) and **in that** the drive-side hollow shaft (31) of the first sub-transmission (A) is couplable via the third switching element (SE-D) to the loosely-mounted drive-side gearwheel (35) of the fourth wheel plane (RE-4), **in that** the second sub-transmission (B) comprises the fifth wheel plane (RE-5) directly adjacent to the first sub-transmission (A) in the axial direction and **in that** the fifth wheel plane (RE-5) is couplable by means of the third switching element (SE-D) to the first sub-transmission (A) and **in that** the output-side gearwheel (38) of the fifth wheel plane (RE-5) switchable on both sub-transmissions (A, B) is loosely mounted on the output shaft (24) and is couplable via a seventh switching element (SE-G) to the output shaft (24) and **in that** a drive-side idler gearwheel (45), mounted on the second input shaft (23), of the eighth wheel plane (RE-8) is arranged in the axial direction of the second switching element (SE-A) of the second sub-transmission (B) on the one side of the second switching element (SE-A) and a drive-side hollow shaft (41), mounted coaxially on the second input shaft (23), of the second sub-transmission (B) is arranged on the other side of the second switching element (SE-A) and **in that** the idler gearwheel (45) of the eighth wheel plane (RE-8) and the drive-side hollow shaft (41) of the second sub-transmission (B) are couplable via the second switching element (SE-A) alternately to the second input shaft (23) and **in that** the drive-side hollow shaft (41) of the second sub-transmission (B) carries at least one fixed gearwheel (43) of the seventh wheel plane (RE-7).

2. Dual clutch transmission according to claim 1, **characterised in that** the dual clutch transmission is a 12-gear transmission which has in total eight wheel planes (RE-1 to RE-8) by means of which in total eight direct gears (3, 4, 5, 6, 7, 8, 11, 12 - Fig. 2) and in total four twist gears (1, 2, 9, 10 - Fig. 2) are switchable.

3. Dual clutch transmission according to claim 1, **characterised in that** the fifth wheel plane (RE-5) switchable on both sub-transmissions (A, B) is loosely mounted on the second input shaft (23) with its drive-side gearwheel (37) and is couplable by means of the third switching element (SE-D) to the drive-side hollow shaft (31) of the first sub-transmission (A).

4. Dual clutch transmission according to claim 1, **characterised in that** a drive-side gearwheel (39) of the sixth wheel plane (RE-6) is loosely mounted on the drive-side hollow shaft (41) of the second sub-transmission (B) and **in that** the drive-side hollow shaft (41) of the second sub-transmission (B) comprises the fourth switching element (SE-B) with which the loosely-mounted drive-side gearwheel (39) of the sixth wheel plane (RE-6) is couplable with the drive-side hollow shaft (41) of the second sub-transmission (B).

5. Dual clutch transmission according to claim 4, **characterised in that** the drive-side gearwheel (37) of the fifth wheel plane (RE-5) switchable on both sub-transmissions (A, B) is couplable by means of the fourth switching element (SE-B) to the second sub-transmission (B).

6. Dual clutch transmission according to any one of the preceding claims, **characterised in that** the output-side gearwheels (28, 32) of the first and second wheel planes (RE-1, RE-2) of the first sub-transmission (A) are arranged on an output-side hollow shaft (29) of the first sub-transmission (A) in a torque-proof manner, said hollow shaft being mounted coaxially on the output shaft (24) so as to be rotatable.

7. Dual clutch transmission according to claim 6, **characterised in that** the output shaft (24) comprises the fifth switching element (SE-F) by means of which in the first sub-transmission (A), the output-side hollow shaft (29) of the first sub-transmission (A) or an output-side gearwheel (34) of the third wheel plane (RE-3) is alternately couplable to the output shaft (24).

8. Dual clutch transmission according to any one of the preceding claims, **characterised in that** the output-side gearwheels (42, 46) of the seventh and eighth wheel planes (RE-7, RE-8) of the second sub-transmission (B) are arranged in a torque-proof manner on an output-side hollow shaft (44) of the second sub-transmission (B) said hollow shaft being mounted coaxially on the output shaft (24) so as to be rotatable.

9. Dual clutch transmission according to claim 8, **characterised in that** the output shaft (24) comprises the sixth switching element (SE-E) by means of which the output-side hollow shaft (44) of the second sub-transmission (B) is couplable to the output shaft (24).

## Revendications

1. Boîte de vitesses à double embrayage pour un véhicule à moteur, avec des trains de roues dentées commutables par le biais de premier à septième éléments de commutation, qui forment exactement huit plans de roue (RE-1 à RE-8) agencés l'un derrière l'autre dans l'ordre un à huit dans la direction axiale du côté entrée au côté sortie de la boîte de vitesses à double embrayage, qui sont attribués respectivement à une première demi-boîte (A) et à une deuxième demi-boîte (B), desquelles la première demi-boîte (A) présente un premier arbre d'entrée (22) et la deuxième demi-boîte (B) présente un deuxième arbre d'entrée (23), et les deux demi-boîtes (A, B) présentent un arbre de sortie commun (24), dans laquelle les arbres d'entrée (22, 23) coaxiaux l'un à l'autre sont activables de manière alternée par le biais de respectivement un embrayage commutable sous charge (K1, K2), et les rapports de marche avant pairs (2, 4, 6, 8, 10, 12) sont attribués à la première demi-boîte (A) et les rapports de marche avant impairs (1, 3, 5, 7, 9, 11) sont attribués à la deuxième demi-boîte (B), qui sont commutables lors d'un changement de vitesses par le biais des éléments de commutation (SE-A à SE-G), dans laquelle au moins un rapport de marche avant de torsion (1, 2, 9, 10 - figure 2) peut être formé au moyen des plans de roue (RE-1 à RE-8), dans lequel exactement trois plans de roue sont commutés combinés en série dans le flux de couple s'étendant à travers la boîte de vitesses à double embrayage du rapport sélectionné au moyen des éléments de commutation (SE-A à SE-G), dans laquelle les trois plans de roue commutés pour la mise à disposition du rapport de marche avant de torsion sont attribués soit complètement à la première demi-boîte (A) soit complètement à la deuxième demi-boîte (B), et dans laquelle seule la demi-boîte présentant les trois plans de roue commutés est intégrée dans le flux de couple lorsque le rapport de marche avant de torsion est commuté et l'autre demi-boîte est entièrement découplée du flux de couple, **caractérisée en ce que** tous les rapports de marche avant de torsion (1, 2, 9, 10 - figure 2) commutables lors d'un changement de vitesse dans la boîte de vitesses à double embrayage peuvent être formés soit complètement avec trois plans de roue de la première demi-boîte (A) soit complètement avec trois plans de roue de la deuxième demi-boîte (B), de sorte que les deux demi-boîtes (A, B) ne sont couplées l'une à l'autre pour aucun des rapports de marche avant de torsion, qu'exactement cinq éléments de commutation (SE-A, SE-B, SE-D, SE-C, SE-F) commutables des deux côtés dans la direction axiale sont prévus pour la commutation des rapports de marche avant, et qu'au moins un élément de commutation (SE-G, SE-E) commutable d'un côté est prévu, qu'exactement quatre éléments de commutation des cinq éléments de commutation (SE-A, SE-B, SE-D, SE-C, SE-F) commutables des deux côtés sont agencés coaxialement à l'axe d'arbre entrée des arbres d'entrée (22, 23), et qu'exactement un élément de commutation (SE-F) commutable des deux côtés est agencé sur l'arbre de sortie (24), que les arbres d'entrée (22, 23) sont dépourvus de roues dentées solidaires en rotation agencées sur ceux-ci des huit plans de roue (RE-1 à RE-8), et que le premier arbre d'entrée (22) présente exactement un premier élément de commutation (SE-C) commutable des deux côtés dans la direction axiale, et le deuxième arbre d'entrée (23) présente exactement un deuxième élément de commutation (SE-A) commutable des deux côtés dans la direction axiale, et que le premier arbre d'entrée (22) peut être couplé avec les premier à quatrième plans de roue (RE-1 à RE-4) de la première demi-boîte (A) au moyen du premier élément de commutation (SE-C) ou en être découplé, et que le deuxième arbre d'entrée (23) peut être couplé avec les cinquième à huitième plans de roue (RE-5 à RE-8) de la deuxième demi-boîte (B) au moyen du deuxième élément de commutation (SE-A) ou en être découplé, que dans la direction axiale du premier élément de commutation (SE-C) sur son un côté, une roue dentée libre côté entraînement (27), logée sur le premier arbre d'entrée (22), du premier plan de roue (RE-1) est agencée et un arbre creux côté entraînement (31), logé coaxialement sur le premier arbre d'entrée (22), de la première demi-boîte (A) est agencé de l'autre côté du premier élément de commutation (SE-C), qui peuvent être couplés de manière alternée avec le premier arbre d'entrée (22) par le biais du premier élément de commutation (SE-C), et que l'arbre creux côté entraînement (31) de la première demi-boîte (A) porte une roue dentée fixe (30) du deuxième plan de roue (RE-2) et une roue dentée fixe (33) du troisième plan de roue (RE-3), qu'une roue dentée côté entraînement (35) du quatrième plan de roue (RE-4) est logée librement sur l'arbre creux côté entraînement (31) de la première demi-boîte (A), et que l'arbre creux côté entraînement (31) de la première demi-boîte (A) peut être couplé avec la roue dentée côté entraînement (35) logée librement du quatrième plan de roue (RE-4) par le biais d'un troisième élément de commutation (SE-D), que la deuxième demi-boîte (B) présente le cinquième plan de roue (RE-5) directement adjacent à la première demi-boîte (A) dans la direction axiale, et que le cinquième plan de roue (RE-5) peut être couplé avec la première demi-boîte (A) au moyen du troisième élément de commutation (SE-D), et que la roue dentée côté sortie (38) du cinquième plan de roue (RE-5) commutable sur les deux demi-boîtes (A, B) est logée librement sur l'arbre de sortie (24) et peut être couplée avec l'arbre de sortie (24) par le biais d'un septième élément de commutation (SE-G), et que dans la direction axiale du deuxième élément de commutation (SE-A) de la deuxième demi-boîte (B), une roue dentée libre côté entraînement (45), logée sur le deuxième arbre d'entrée (23), du huitième plan de roue (RE-8) est agencée sur l'un côté du deuxième élément de commutation (SE-A) et un arbre creux côté entraînement (41), logé coaxialement sur le deuxième arbre d'entrée (23), de la deuxième demi-boîte (B) est agencé de l'autre côté du deuxième élément de commutation (SE-A), et que la roue dentée libre (45) du huitième plan de roue (RE-8) et l'arbre creux côté entraînement (41) de la deuxième demi-boîte (B) peuvent être couplés de manière alternée avec le deuxième arbre d'entrée (23) par le biais du deuxième élément de commutation (SE-A), et que l'arbre creux côté entraînement (41) de la deuxième demi-boîte (B) porte au moins une roue dentée fixe (43) du septième plan de roue (RE-7).

2. Boîte de vitesses à double embrayage selon la revendication 1, **caractérisée en ce que** la boîte de vitesses à double embrayage est une boîte de vitesses à 12 rapports, qui présente un total de huit plans de roue (RE-1 à RE-8), avec lesquels un total de huit prises directes (3, 4, 5, 6, 7, 8, 11, 12 - figure 2) et un total de quatre rapports de torsion (1, 2, 9, 10 - figure 2) sont commutables.

3. Boîte de vitesses à double embrayage selon la revendication 1, **caractérisée en ce que** le cinquième plan de roue (RE-5) commutable sur les deux demi-boîtes (A, B) est logé librement avec sa roue dentée côté entraînement (37) sur le deuxième arbre d'entrée (23) et peut être couplé à l'arbre creux côté entraînement (31) de la première demi-boîte (A) au moyen du troisième élément de commutation (SE-D).

4. Boîte de vitesses à double embrayage selon la revendication 1, **caractérisée en ce qu'**une roue dentée côté entraînement (39) du sixième plan de roue (RE-6) est logée librement sur l'arbre creux côté entraînement (41) de la deuxième demi-boîte (B), et que l'arbre creux côté entraînement (41) de la deuxième demi-boîte (B) présente le quatrième élément de commutation (SE-B), avec lequel la roue dentée côté entraînement (39) logée librement du sixième plan de roue (RE-6) peut être couplée avec l'arbre creux côté entraînement (41) de la deuxième demi-boîte (B).

5. Boîte de vitesses à double embrayage selon la revendication 4, **caractérisée en ce que** la roue dentée côté entraînement (37) du cinquième plan de roue (RE-5) commutable sur les deux demi-boîtes (A, B) peut être couplée avec la deuxième demi-boîte (B) au moyen du quatrième élément de commutation (SE-B).

6. Boîte de vitesses à double embrayage selon l'une quelconque des revendications précédentes, **caractérisée en ce que** les roues dentées côté sortie (28, 32) des premier et deuxième plans de roue (RE-1, RE-2) de la première demi-boîte (A) sont agencées solidaires en rotation sur un arbre creux côté sortie (29) de la première demi-boîte (A), qui est logé de manière rotative coaxialement sur l'arbre de sortie (24).

7. Boîte de vitesses à double embrayage selon la revendication 6, **caractérisée en ce que** l'arbre de sortie (24) présente le cinquième élément de commutation (SE-F), au moyen duquel l'arbre creux côté sortie (29) de la première demi-boîte (A) ou une roue dentée côté sortie (34) du troisième plan de roue (RE-3) peut être couplé avec l'arbre de sortie (24) de manière alternée dans la première demi-boîte (A).

8. Boîte de vitesses à double embrayage selon l'une quelconque des revendications précédentes, **caractérisée en ce que** les roues dentées côté sortie (42, 46) des septième et huitième plans de roue (RE-7, RE-8) de la deuxième demi-boîte (B) sont agencées solidaires en rotation sur un arbre creux côté sortie (44) de la deuxième demi-boîte (B), qui est logé de manière rotative coaxialement sur l'arbre de sortie (24).

9. Boîte de vitesses à double embrayage selon la revendication 8, **caractérisée en ce que** l'arbre de sortie (24) présente le sixième élément de commutation (SE-E), au moyen duquel l'arbre creux côté sortie (44) de la deuxième demi-boîte (B) peut être couplé avec l'arbre de sortie (24).
